# EUROPÄISCHE PATENTSCHRIFT

(11) **EP 2 671 691 B1**
(45) Veröffentlichungstag und Bekanntmachung des Hinweises auf die Patenterteilung: **10.06.2026**
(21) Anmeldenummer: 13002907.7
(22) Anmeldetag: 05.06.2013
(51) Int. Cl.: B25J 9/16

(54) **Verfahren und Vorrichtung zum Steuern einer Manipulatoranordnung**
Method and device for controlling a manipulator assembly
Procédé et dispositif de commande d'un agencement de manipulateurs

(30) Priorität: 05.06.2012 DE 102012011108
(43) Veröffentlichungstag der Anmeldung: 11.12.2013
(73) Patentinhaber: KUKA Deutschland GmbH, 86165 Augsburg (DE)
(72) Erfinder: Munz, Heinrich, 88368 Bergatreute (DE); Klueger, Hans-Peter, 86391 Stadtbergen (DE); Hietmann, Gerhard, 86405 Herbertshofen (DE); Bonin, Uwe, 86161 Augsburg (DE)
(74) Vertreter: Schlotter, Alexander Carolus Paul

(56) Entgegenhaltungen:
- EP-A1- 2 315 093
- DE-A1- 102008 015 948
- DE-A1- 102010 048 369

## Beschreibung

Die vorliegende Erfindung betrifft ein Verfahren und eine Vorrichtung zum Steuern einer Manipulatoranordnung mit wenigstens einem Manipulator, insbesondere einem Roboter.

Manipulatoranordnungen werden zunehmend auch außerhalb von Sicherheitszellen, i.e. außerhalb von strukturierten Umgebungen betrieben, wobei z.B. Menschen den Arbeitsraum eines Manipulators durchqueren oder sogar direkt mit einem Manipulator zusammenarbeiten können. Beim Operieren in unstrukturierten Umgebungen können Gefahren für Menschen entstehen.

Dieses Gefahrenpotenzial begründet die Notwendigkeit, eine Manipulatoranordnung bzw. einen Manipulator so zu steuern, dass sowohl bei menschlichem als auch bei technischem Versagen Unfallschäden in einem akzeptablen Bereich verbleiben.

Typische Maßnahmen zum sicheren Steuern von Manipulatoren, sogenannte Sicherheitsfunktionen oder Überwachungen, betreffen u.a. Begrenzungen bestimmter Zustände des Manipulators, z.B. des Arbeitsraumes, der Geschwindigkeit, der Beschleunigung, der Kräfte, etc.

Überwachungen müssen allerdings zuverlässig sein, um das Gefahrenpotenzial auf ein akzeptables Niveau zu senken. Nach betriebsinterner Praxis werden Manipulatoren heutzutage zumindest teilweise in sogenannter sicherer Technik entwickelt und aufgebaut. Sichere Technik erfüllt gewöhnlich Anforderungen applikationsspezifischer Normen, z.B. der EN-13849 und/oder IEC-61508. Sichere Technik kann u.a. Sensorik, Datenverarbeitung und/oder Kommunikationsstrecken betreffen und umfasst üblicherweise alle Teile einer Überwachung.

Um die Integrität von Überwachungsfunktionen neben der sicheren Technik am Manipulator zu gewährleisten, müssen diese durch eine Sicherheitssteuerung betrieben werden, die ebenfalls den Anforderungen der entsprechenden Sicherheitsnormen genügt. Heutzutage werden Manipulatoranordnungen nach betriebsinterner Praxis mit einer Sicherheitssteuerung parallel zu einer nicht-sicheren Standardsteuerung betrieben und über eine eigene sichere Mensch-Maschine-Schnittstelle konfiguriert. Die Sicherheitssteuerung wird also unabhängig der nicht-sicheren Steuerung betrieben und kann bestenfalls über eigens dafür eingerichtete Kommunikationskanäle in begrenztem Umfang mit dieser zusammenwirken.

In der DE 10 2004 041 821 A1 ist eine Sicherheitssteuerung offenbart, in der zonenweise Informationen über Positionen beweglicher Teile eines Handhabungsgerätes an eine Sicherheitssteuerung übermittelt werden, so dass von der Sicherheitssteuerung im Zusammenwirken mit der Handhabungsgerätesteuerung sicherheitsrelevante Funktionen des Handhabungsgerätes gesteuert werden.

Die DE 10 2005 011 143 A1 betrifft eine Vorrichtung zum Steuern wenigstens einer sicherheitsrelevanten Funktion eines Roboters mit wenigstens einem ortsauflösenden Sensor, insbesondere einer Kamera, zur Überwachung eines Sicherheitsbereichs des Roboters, einer Auswerteeinheit zur Verarbeitung der vom Sensor gelieferten Daten, Auslösemitteln zum Auslösen der sicherheitsrelevanten Funktion bei einem Eindringen eines unzulässigen Objekts in den Sicherheitsbereich und Mitteln zur Veränderung der Kontur des Sicherheitsbereichs in Abhängigkeit von Bewegungs-, Positions- oder Betriebsdaten des Roboters.

Die EP 1 035 953 B1 betrifft ein Überwachungs- und Steuerungsgerät zum Überwachen einer technischen Anlage mit erhöhten Sicherheitsanforderungen, insbesondere eines Handhabungsgerätes, mit einer Steuereinheit sowie mit dieser verbundenen Aktoren zum Ausführen gefahrbringender Aktionen, wobei das Überwachungs- und Steuerungsgerät mit Sensoren verbunden ist und deren Zustände auswertet, verarbeitet und steuert.

DE 10 2008 015 948 A1 offenbart ein Verfahren zur Überwachung eines Manipulators, insbesondere eines Roboters. Das Verfahren umfasst die Schritte: Durchführen wenigstens einer Funktionsprüfung des Manipulators und Durchführen wenigstens einer Parameterüberwachung des Manipulators, wobei die durchzuführenden Funktionsprüfungen in Abhängigkeit von den durchzuführenden Parameterüberwachungen aus einer Mehrzahl von Funktionsprüfungen ausgewählt werden.

EP 2 315 093 A1 offenbart ein Verfahren zur Steuerung eines Manipulators, insbesondere eines Roboters. Das Verfahren umfasst die Schritte: Bestimmen einer Soll-Bahn des Manipulators; Bestimmen einer Bewegungsgröße für diese Soll-Bahn; wahlweise, Bestimmen eines Bahnabschnitts mit einem vorgegebenen Verlauf einer Bewegungsgröße, und automatisches Bestimmen dieser Bewegungsgröße auf Basis in diesem Bahnabschnitt zulässiger Bewegungsgrößen.

DE 10 2010 048 369 A1 offenbart ein Verfahren zur Sicherheitsüberwachung wenigstens eines Manipulators, insbesondere eines Roboters. Die Sicherheitsüberwachung ist als Zustandsmaschine implementiert, welche zwischen wenigstens zwei Zuständen wechseln kann, in denen je wenigstens eine Sicherheitsfunktionalität überwacht wird.

Aufgabe der vorliegenden Erfindung ist es, eine Manipulatoranordnung zu verbessern.

Diese Aufgabe wird durch ein Verfahren mit den Merkmalen des Anspruchs 1 gelöst. Anspruch 12 stellt eine Steuerung zum Durchführen eines erfindungsgemäßen Verfahrens unter Schutz, Anspruch 13 schützt ein Computerprogramm, welches ein erfindungsgemäßes Verfahren ausführt, Anspruch 14 ein Computerprogrammprodukt, insbesondere ein Speichermedium, mit einem solchen Computerprogramm. Die Unteransprüche betreffen bevorzugte Weiterbildungen.

Bei einem erfindungsgemäßen Verfahren zum Steuern einer Manipulatoranordnung mit einem oder mehreren Manipulatoren wird zunächst ein virtueller Soll-Prozess für ein oder mehrere Manipulatoren vorgegeben. Zum Beispiel wird eine Anzahl von kartesischen Soll-Posen vorgegeben, die durch einen Manipulator nacheinander angefahren werden sollen. Ein Manipulator ist insbesondere ein Roboter und vorzugsweise in mehreren Freiheitsgraden, insbesondere in vier, sechs oder sieben Freiheitsgraden, beweglich, wobei ein Freiheitsgrad insbesondere durch eine Achse des Manipulators realisiert wird. Die Manipulatoranordnung weist eine oder mehrere Steuerungen auf, vorzugsweise ist jeder Manipulator der Manipulatoranordnung mit einer Steuerung ausgestattet. Zusätzlich oder alternativ weist die Manipulatoranordnung eine Gesamtsteuerung auf.

Nach dem Vorgeben eines virtuellen Soll-Prozesses führt die Manipulatorordnung, insbesondere ein oder mehrere Manipulatoren der Manipulatoranordnung, einen realen Ist-Prozess aus. Zum Beispiel das Abfahren einer Bahn durch einen Manipulator.

Durch die Steuerung der Manipulatoranordnung wird der reale Ist-Prozess überwacht. Zum Beispiel wird überwacht, ob der Manipulator beim Abfahren einer Bahn eine zulässige Höchstgeschwindigkeit nicht überschreitet. Vorzugsweise wird durch eine Steuerung eines Manipulators der Manipulatoranordnung ein realer Ist-Prozess des jeweiligen Manipulators überwacht. Erfindungsgemäß werden eine oder mehrere Überwachungen des realen Ist-Prozesses durch die Steuerung, insbesondere automatisch, vorgegeben. Die vorgegebenen Überwachungen werden basierend auf dem virtuellen Soll-Prozess vorgegeben.

Dadurch wird es möglich, zu einem vorgegebenen Soll-Prozess automatisch entsprechende Überwachungen zu generieren, insbesondere ohne dass diese durch eine separate Sicherheitssteuerung extra vorgegeben werden müssen.

Eine Vorgabe im Sinn der vorliegenden Erfindung kann eine Konfiguration eines virtuellen Soll-Prozesses der Manipulatoranordnung, insbesondere eines oder mehrerer Manipulatoren der Manipulatoranordnung umfassen. Zusätzlich oder alternativ kann eine Vorgabe eine, insbesondere automatische, Vorgabe umfassen, welche durch eine Steuerung aus der Umgebung der Manipulatoranordnung kommuniziert wird. Vorzugsweise ist eine Vorgabe abhängig von einem Zustand der Manipulatoranordnung, insbesondere eines Zustandes eines Manipulators der Manipulatoranordnung und/oder eines Werkzeuges eines Manipulators der Manipulatoranordnung. Eine Vorgabe kann abhängig eines Werkstücks der Manipulatoranordnung sein. Zusätzlich oder alternativ kann eine Vorgabe durch eine Vorrichtung kommuniziert werden, die mit der Manipulatoranordnung zusammenwirkt.

Ein Prozess im Sinn der vorliegenden Erfindung kann ein durch die Manipulatoranordnung zielgerichtet durchgeführter Vorgang sein. Ein Prozess kann eine algorithmisch ablaufende Informationsverarbeitung umfassen. Insbesondere ist ein Prozess ein Vorgang, der durch ein Programm kontrolliert wird, welches insbesondere zur Ausführung einen Prozessor, der vorzugsweise durch eine Steuerung bereitgestellt wird, benötigt.

Ein Prozess weist vorzugsweise Teilprozesse auf, welche sowohl hierarchisiert und/oder vertikal integriert eine Abfolge von Verarbeitungsschritten zu einem Endergebnis des Teilprozesses beinhalten. Zusätzlich oder alternativ weist ein Prozess vorzugsweise Teilprozesse auf, welche parallel, insbesondere nebenläufig, und/oder sequentiell, insbesondere zeitlich nacheinander, verarbeitet werden. Insbesondere werden zwei oder mehr Manipulatoren der Manipulatoranordnung parallel betrieben. Dabei sind insbesondere jedem Manipulator ein oder mehrere Teilprozesse zugeordnet. Die Teilprozesse können sowohl durch eine Steuerung ausgeführt werden, wobei die Zuteilung der Betriebsmittel dieser Steuerung zu jedem Teilprozess vorzugsweise durch einen Scheduling-Algorithmus organisiert wird. Zusätzlich oder alternativ können zwei oder mehrere Teilprozesse durch eigens zugeordnete Steuerungen betrieben werden. Insbesondere so, dass diesen Teilprozessen Betriebsmittel exklusiv zugeordnet werden. Ein Prozess und/oder ein Teilprozess stellt vorzugsweise einen Echtzeitprozess dar.

Eine Überwachung im Sinn der vorliegenden Erfindung ist vorzugsweise ein Prozess, der eine zielgerichtete Beobachtung von Vorrichtungen, Verfahren und/oder Lebewesen, insbesondere Menschen, durchführt. Eine Überwachung dient insbesondere der Erhöhung der Sicherheit von Mensch und Maschine. Vorzugsweise dient eine Überwachung der Erhöhung der Sicherheit von Menschen und Vorrichtungen der Manipulatoranordnung. Zusätzlich oder alternativ kann eine Überwachung auch der Erhöhung der Sicherheit von Menschen und Vorrichtungen dienen, welche mit der Manipulatoranordnung zusammenwirken und/oder sich im Gefahrenbereich der Manipulatoranordnung befinden. Eine Überwachung weist vorzugsweise einen Vergleich von Ist- und Soll-Werten auf. Eine Überwachung kann einzuhaltende Grenzwerte, insbesondere positionsabhängige Grenzwerte (z.B. Arbeitsraum, Auslenkung eines Manipulators, Geschwindigkeit, Beschleunigung, Ruck, etc.) betreffen und/oder kraft- und/oder momentenabhängige Grenzwerte betreffen, sowie Kombinationen aus diesen Werten. Zusätzlich oder alternativ kann ein Parameter eines Modells, insbesondere eines geschätzten Modell, überwacht werden, wobei das Modell vorzugsweise auf Basis einer erfassten Information geschätzt ist. Eine Überwachung erfolgt insbesondere kontinuierlich, diskret, periodisch und/oder in unregelmäßigen Abständen, insbesondere ereignisgesteuert. Erfindungsgemäß wird die Manipulatoranordnung, insbesondere ein oder mehrere Manipulatoren der Manipulatoranordnung, in einen sicheren Zustand überführt, wenn eine Überwachung ein Fehlverhalten registriert. Ein sicherer Zustand kann durch einen Not-Halt erreicht werden und/oder durch eine Weichschaltung, insbesondere bestimmter, Achsen eines Manipulators.

Erfindungsgemäß wird eine Überwachung auf Basis einer Erfassung eines Zustandes der Manipulatoranordnung vorgegeben. Zum Beispiel wird die Einhaltung einer maximal zulässigen Geschwindigkeit vorgegeben, wenn die Tür einer Roboterzelle geöffnet wird. Ein Zustand kann ein physikalischer Zustand sein, insbesondere eine Position, eine Geschwindigkeit, eine Beschleunigung, ein Ruck, eine Kraft eines oder mehrerer Manipulatoren oder einer anderen Vorrichtung, insbesondere eines Werkstücks und/oder eines Werkzeugs, der Manipulatoranordnung. Zur kompakteren Darstellung wird vorliegend auch ein (Dreh-) Moment, d.h. ein antiparalleles Kräftepaar, verallgemeinernd als Kraft bezeichnet. Vorteilhaft kann eine Überwachung abhängig von einer bestimmten Bewegung eines Manipulators der Manipulatoranordnung vorgegeben werden.

In einer bevorzugten Ausführung wird eine Überwachung auf Basis einer Steuerung vorgegeben. Zum Beispiel wird eine Überwachung durch eine Gesamtsteuerung der Manipulatoranordnung vorgegeben. Eine Steuerung kann insbesondere eine Steuerung eines Manipulators der Manipulatoranordnung und/oder eine andere Vorrichtung der Manipulatoranordnungen darstellen. Zusätzlich oder alternativ kann eine Steuerung eine Steuerung betreffen, oder eine Vorrichtung, die mit der Manipulatoranordnung zusammenwirkt. Vorzugsweise wird eine Überwachung auf Basis der Ablaufsteuerung des virtuellen Ist-Prozesses vorgegeben. Vorteilhaft kann dadurch automatisch durch eine Steuerung eine Überwachung abhängig von einer bestimmten Ist-Prozess-Situation vorgegeben werden.

In einer bevorzugten Ausführung wird eine Überwachung auf Basis eines Werkzeugs eines Manipulators der Manipulatoranordnung und/oder auf Basis eines zu manipulierenden Werkstücks vorgegeben. Zum Beispiel wird eine Momentenüberwachung vorgegeben, sobald ein Werkzeug eines Roboters signalisiert, dass es ein Bauteil gegriffen hat. Vorzugsweise wird eine Überwachung auf Basis einer Vorrichtung, die mit der Manipulatoranordnung zusammenwirkt, vorgegeben. Eine solche Vorrichtung kann neben einer Steuerung ein weiterer Manipulator und/oder eine Manipulatoranordnung sein. Zusätzlich oder alternativ kann eine solche Vorrichtung eine Großraumüberwachungsanlage sein und/oder eine Notfallvorrichtung. Vorteilhaft können dadurch Überwachungen situationsspezifisch vorgegeben werden.

Ein Zustand kann durch bestimmte Komponenten, insbesondere ein Vorhandensein bzw. Nicht-Vorhandensein bestimmter Komponenten, einer Vorrichtung definiert sein. Zum Beispiel kann eine Geschwindigkeitsüberwachung für einen Roboter nur dann vorgegeben werden, wenn der Roboter Positionssensoren in sicherer Technik aufweist. Erfindungsgemäß geben ein oder mehrere Zustände ein Vorhandensein bzw. ein Nicht-Vorhandensein von sicherer und/oder nicht-sicherer Sensorik und/oder Aktuatorik. Eine solche Vorrichtung kann insbesondere die o.g. Vorrichtungen betreffen. Ein Zustand kann auch durch eine Eigenschaft eines Verfahrens definiert sein. Vorzugsweise indizieren eine oder mehrere Zustände eine Sicherheit und/oder Nicht-Sicherheit eines Verfahrens. Vorteilhaft kann dadurch eine Überwachung entsprechend verfügbarer sicherer Komponenten und Verfahren, insbesondere automatisch, vorgegeben werden.

In einer bevorzugten Ausführung umfasst ein Prozess und/oder eine Überwachung eines erfindungsgemäßen Verfahrens mehrere hierarchisierte Teilprozesse, insbesondere eine Bahnplanung und/oder eine kinematische Transformation. Zum Beispiel werden aus einer kartesischen Pfadplanung für einen Roboter Interpolationswerte bestimmt, welche als Eingangsgröße einer Rücktransformation dienen, aus der die entsprechenden Achswerte des Roboters errechnet werden. Die hierarchisierten Teilprozesse können dabei innerhalb einer vertikalen oder/oder horizontalen Integration organisiert sein. Die hierarchisierten Teilprozesse werden vorzugsweise durch eine Ordnungsrelation oder durch einen, insbesondere gerichteten, Graphen strukturiert. Ein Teilprozess kann dabei einen oder mehrere übergeordnete Teilprozesse und/oder einen oder mehrere untergeordnete Teilprozesse aufweisen. Ein Teilprozess kann eine Bahnplanung darstellen, eine Filterung, eine Rückwärtstransformation und/oder eine Vorwärtstransformation. Vorteilhaft können dadurch Überwachungen auf bestimmte Teile des Ist-Prozesses gerichtet sein.

Vorzugsweise wird durch die Steuerung eine oder mehrere Überwachungen eines Teilprozesses des realen Ist-Prozesses auf Basis eines Teilprozesses des virtuellen Soll-Prozesses vorgegeben. Zum Beispiel werden im Soll-Prozess errechnete Interpolationswerte mit den aus dem Ist-Prozess ermittelten Interpolationswerten verglichen und überwacht, ob eine maximal zulässige Differenz nicht überschritten wird. Insbesondere wird dabei ein Ergebnis eines Teilprozesses des Ist-Prozesses mit einem Ergebnis eines Teilprozesses eines Soll-Prozesses verglichen. Zusätzlich oder alternativ wird ein Parameter eines Teilprozesses eines Sollprozesses mit einem Parameter eines Teilprozesses eines Ist-Prozesses verglichen. Vorzugsweise betrifft eine Überwachung Teilprozesse unterschiedlicher Hierarchieebenen. Zum Beispiel wird die Einhaltung einer Geschwindigkeit dadurch überwacht, dass die Differenz einer Abweichung zweier aufeinanderfolgender Positionswerte eines Positionssignals einen maximal zulässigen Wert nicht überschreitet. Insbesondere wird eine Abweichung zwischen der überwachten Information des Sollprozesses und des Ist-Prozesses gegen einen Grenzwert verglichen, der nicht oder nur begrenzt oft überschritten werden darf, insbesondere während eines definierten Zeitraums. Vorteilhaft können dadurch Überwachungen flexibel vorgegeben werden.

In einer bevorzugten Ausführung umfasst ein Prozess mehrere zeitlich nacheinander folgende und/oder nebenläufig ablaufende Teilprozesse. Zum Beispiel führt ein Roboter eine Bewegung aus und gleichzeitig öffnet sich ein am Werkzeug des Roboters befindlicher Greifer. Ein Teilprozess kann eine ungebundene Bewegung, insbesondere eine Bewegung eines Manipulators der Manipulatoranordnung im Freiraum oder in einem Medium sein. Zusätzlich oder alternativ kann ein Teilprozess einen Umgebungskontakt umfassen. Insbesondere einen Umgebungskontakt eines Manipulators der Manipulatorvorrichtung mit einem körperlichen Gegenstand und/oder ein Umgebungskontakt eines Werkzeugs eines solchen Manipulators mit einem körperlichen Gegenstand. Vorteilhaft können dadurch Überwachungen auf bestimmte Phasen des Ist-Prozesses gerichtet sein.

Erfindungsgemäß wird eine Überwachung modellbasiert vorgegeben. Zum Beispiel wird eine Geschwindigkeitsüberwachung auf Basis einer Ableitung der Positionssignale des Roboters und/oder auf Basis eines Zustandsraummodels vorgegeben. Ein Modell im Sinn der Erfindung ist vorzugsweise ein Modell eines Ist-Prozesses oder eines Teilprozesses eines Ist-Prozesses. Ein Modell kann auch einen Ist-Prozess oder einen oder mehrere Teilprozesse eines Soll-Prozesses abbilden. Entsprechend kann eine Überwachung auf ein oder mehrere Ergebnisse eines Modells gerichtet sein. Zusätzlich oder alternativ kann eine Überwachung auf einen oder mehrere Parameter eines Modells gerichtet sein. Vorzugsweise umfasst ein Modell einen Zustandsbeobachter und/oder einem Kalmanfilter. Zusätzlich oder alternativ kann ein Modell einen Arbeitsraum eines oder mehrerer Manipulatoren der Manipulatoranordnung abbilden. Dadurch können abhängig von diesem abgebildeten Arbeitsraum Arbeitsraumgrenzen überwacht werden. Erfindungsgemäß transformiert ein Modell eine sicher erfasste Größe in eine Größe, die nicht-sicher erfasst wird. Dadurch kann ein Zustand überwacht werden, der nicht sicher erfasst wird. Vorteilhaft kann durch ein Modell ein Zustand eines Roboters überwacht werden ohne diesen durch eine direkte Messung zu beobachten.

Nach einer hier beschriebenen Ausführung wird eine Überwachung durch einen Benutzer vorgegeben. Zum Beispiel wird eine Überwachung für einen Roboter durch einen Bediener dieses Roboters konfiguriert. Ein Benutzer kann insbesondere ein Bediener der Manipulatoranordnung sein. Der Benutzer kann die Überwachung an derselben Benutzerschnittstelle vorgeben, an der er auch den virtuellen Soll-Prozess vorgibt. Zusätzlich oder alternativ kann ein Benutzer eine Person sein, die Anweisungen an die Manipulatoranordnung über eine Kommunikationsschnittstelle, insbesondere ein Netzwerk, vorzugsweise über das Internet kommandiert. Vorteilhaft kann dadurch eine Überwachung auf Basis neuer Einschätzungen eines menschlichen Bedieners modifiziert werden. Zusätzlich oder alternativ kann eine Überwachung durch einen Zustand einer Vorrichtung vorgegeben werden. Ein solcher Zustand kann insbesondere ein Zustand einer Manipulatoranordnung, einer Steuerung oder einer Vorrichtung aus der Umgebung der Manipulatoranordnung sein, die mit der Manipulatoranordnung zusammenwirkt. Durch eine solche vorgegebene Überwachung kann insbesondere eine standardmäßig vorgegebene Überwachung modifiziert, erweitert und/oder ersetzt werden. Zusätzlich oder alternativ kann eine bestehende Überwachung qualitativ, insbesondere durch Anpassen eines Parameters, und/oder strukturell, insbesondere durch Hinzufügen neuer Teilüberwachungen, verändert werden. Vorteilhaft kann dadurch eine Modifizierung einer oder mehrerer Überwachungen automatisiert durchgeführt werden, während der Roboter einen Ist-Prozess ausführt.

Nach einem ersten Aspekt einer bevorzugten Ausführung wird die Vorgabe eines Soll-Prozesses und/oder die Vorgabe einer Überwachung off-line, insbesondere vorab, ausgeführt und vorzugsweise erst danach die Ausführung des realen Ist-Prozesses gestartet. Vorteilhaft kann dadurch zunächst sichergestellt werden, ob ein vorgegebener Soll-Prozess und/oder eine vorgegebene Überwachung allen entsprechenden Anforderungen genügen.

Nach einem zweiten Aspekt einer bevorzugten Ausführung wird die Vorgabe eines Soll-Prozesses und/oder die Vorgabe einer Überwachung on-line ausgeführt. Dies kann insbesondere während einer Ausführung eines realen Ist-Prozesses erfolgen. Zum Beispiel wird während der Fahrt ein maximal zulässiger Geschwindigkeitswert für einen Roboter nach unten korrigiert. Vorzugsweise ist die on-line Modifikation einer Überwachung eines Teilprozesses möglich während ein anderer Teilprozess ausgeführt wird. Insbesondere ist allerdings auch eine Modifikation einer Überwachung eines Teilprozesses möglich, während dieser Teilprozess ausgeführt wird. Vorzugsweise ist eine Ausführung des Ist-Prozesses erst möglich, wenn in einem vorhergehenden Schritt eine Freigabe der Ausführung erfolgt ist, insbesondere durch ein Freigabesignal. Vorteilhaft können dadurch Änderungen an einer oder mehreren Überwachungen vorgenommen werden, nachdem der Ist-Prozess gestartet wurde.

Nach einer bevorzugten Ausführung ist eine Vorgabe einer Überwachung autorisiert veränderbar. Zum Beispiel erfolgt durch einen besonderes ausgebildeten Benutzer die Konfiguration von Überwachungen, die andere Benutzer nicht konfigurieren dürfen. Insbesondere ist die Menge und der Umfang an Vorgabemöglichkeiten in verschiedenen Klassen organisiert. Vorzugsweise unterscheiden die Klassen Vorgaben durch "Bediener", "Experte" und "Adminstrator". Dabei besitzen "Bediener" insbesondere nur die Möglichkeit einen virtuellen Soll-Prozess im Rahmen von bereits vorgegebenen Parametern, insbesondere Parametern der Sicherheitsfunktionen, vorzugeben. Experten können insbesondere zusätzlich auch bestimmte Sicherheitsfunktionen dazu- oder abwählen. Vorzugsweise kann allein ein Administrator Parameter von Sicherheitsfunktionen, z.B. Arbeitsraum-, Geschwindigkeits- und/oder Kraftgrenzwerte modifizieren und eine vollständige Auswahl treffen, welche Sicherheitsfunktionen eingesetzt werden sollen. Die Klassen betreffen vorzugsweise nicht nur Benutzer, sondern auch Vorrichtungen, durch die virtuelle Soll-Prozesse und/oder Überwachungen vorgegeben werden können. Vorteilhaft kann dadurch sichergestellt werden, dass allein berechtigte Personen und/oder Vorrichtungen eine vollständige Kontrolle über die Sicherheitsfunktionen ausüben dürfen.

Nach einer bevorzugten Ausführung werden eine oder mehrere Überwachungen sicher vorgegeben. Zum Beispiel wird eine Geschwindigkeitsüberwachung redundant zweikanalig vorgegeben. Eine sichere Vorgabe ist insbesondere eine Vorgabe, die einer gängigen Sicherheitsnorm für Manipulatoranordnungen, vorzugsweise der EN 13849 und/oder der IEC 61508, entspricht. Nach einem ersten Aspekt dieser Ausführung wird eine Überwachung sicher durch eine entsprechende Schnittstelle, insbesondere eine sichere Bedienerschnittstelle vorgegeben. Dies kann eine ergonomisch speziell zur Vermeidung von Eingabefehlern entwickelte Benutzerschnittstelle sein. Zusätzlich oder alternativ kann eine sichere Vorgabe einer Überwachung durch ein entsprechendes Netzwerk kommuniziert werden, insbesondere durch EtherCAT, vorzugsweise mit der sicherheitsgerichteten Funktionalität FsoE. Dadurch können vorteilhaft Fehler bereits bei der Konfiguration von Überwachungen vermieden werden. Nach einem zweiten Aspekt dieser Ausführung wird eine Überwachung in einer sicheren Struktur erzeugt. Eine solche Überwachung weist insbesondere eine oder mehrere strukturelle oder zeitliche Redundanzen auf. Zusätzlich oder alternativ kann eine sichere Überwachung Kreuzvergleiche zwischen mehreren unabhängigen Überwachungen aufweisen, die auf einen Ist-Prozess bzw. auf einen Teil-Prozess dieses Ist-Prozesses gerichtet sind. Vorzugsweise wird dadurch eine höhere Zuverlässigkeit der Überwachungen ermöglicht.

Die bevorzugten Weiterbildungen können vorzugsweise vorteilhaft miteinander kombiniert werden.

Weitere Vorteile und Merkmale ergeben sich aus den Unteransprüchen und den Ausführungsbeispielen. Hierzu zeigt, teilweise schematisiert:
- Fig. 1:: eine Ausführung des erfindungsgemäßen Verfahrens;
- Fig. 2:: Überwachungen verschiedener Teil-Prozesse nach einer Ausführung des erfindungsgemäßen Verfahrens;
- Fig. 3: Überwachungen verschiedener Teil-Prozesse nach einer Ausführung des erfindungsgemäßen Verfahrens.

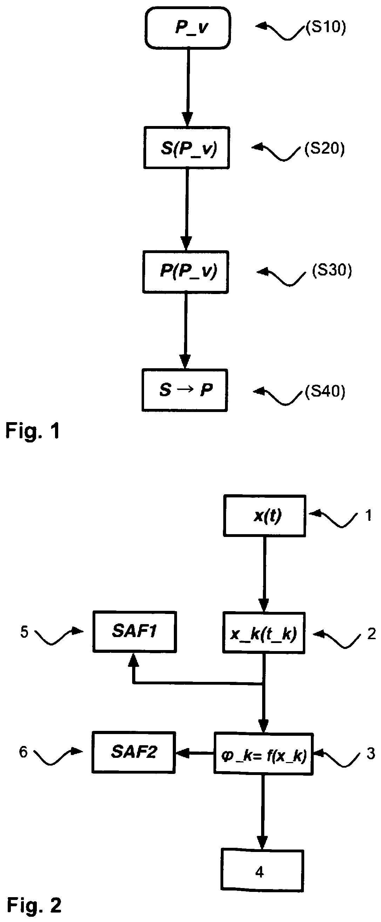

Fig. 1 zeigt das erfindungsgemäße Verfahren. In einem ersten Schritt wird eine virtuelle Solltrajektorie P_v vorgegeben. In einem zweiten Schritt wird auf Basis der virtuellen Soll-Trajektorie eine Überwachung automatisch generiert. In einem dritten Schritt wird durch einen Manipulator die virtuelle Soll-Trajektorie umgesetzt und eine reale Ist-Trajektorie abgefahren. Dabei wird die Überwachung gemäß der Vorgabe ausgeführt, so dass die Ist-Trajektorie überwacht wird.

Fig. 2 zeigt automatisch generierte Überwachungen 5,6 eines hierarchisch aufgebauten Teilprozesses. Ausgehend von einer Bewegung x(t) werden Interpolationssollwerte generiert. Diese werden von einer Überwachung kontrolliert und mit der initial vorgegebenen Bewegung verglichen. Aus den interpolierten kartesischen Werten werden über eine kinematische Transformation Interpolationsachswerte ermittelt. Ein Überwachung registriert auf Basis dieser interpolierten Achswerte, ob maximal Arbeitsraumgrenzen überschritten werden. Dazu wird das kinematische Modell analysiert. Schließlich werden die Interpolationsachswerte zur Ausführung an einen Roboter 4 kommuniziert.

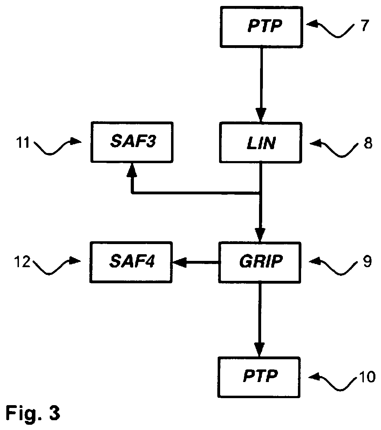

Fig. 3 zeigt automatisch generierte Überwachungen 11,12 eines in phasig aufgebauten Teilprozesses. Zunächst wird durch einen Manipulator eine PTP-Bewegung ausgeführt. Danach wird eine LIN-Bewegung ausgeführt. Diese LIN-Bewegung wird durch eine Überwachung beobachtet. Dabei werden maximale Geschwindigkeiten überwacht. In einer dritten Phase wird durch den Roboter eine Greifbewegung ausgeführt. Die Greifbewegung wird ebenfalls überwacht. Die Überwachung der Greifbewegung prüft, ob durch den Greifer beim Greifen maximal einzuhaltende Kraftwerte überschritten werden.

In einer nicht illustrierten Ausführung wird ein Soll-Prozess P_v für eine Mensch-Roboter Interaktion über eine Benutzerschnittstelle vorgegeben. Die Benutzerschnittstelle zeigt dem Bediener neben der bereits programmierten Prozessplanung weiterhin an, welche Größen bzw. Zustände für benutzerkonfigurierbare Überwachungen einer solchen Interaktion eines Menschen mit einem Roboter eingesetzt werden können. Diese Größen bzw. Zustände müssen in sicherer Technik erfasst werden und werden in der Benutzerschnittstelle gelb markiert und zur Programmierung von Überwachungen freigegeben. Die Überwachungen S werden vom Benutzer über dieselbe Benutzerschittstelle vorgegeben, wie der virtuelle Sollprozess. Die Konfiguration erfolgt in einer IEC-61131-Sprache, z.B. als Sequential Function Chart und/oder einem Function Block Diagram. Zunächst konfiguriert ein Benutzer, der sich an der Steuerung mit einem Bedienerstatus ausweist, allein einen virtuellen Soll-Prozess und kennzeichnet, dass dieser innerhalb einer Mensch-Roboter-Interaktion ausgeführt werden soll. Die Steuerung generiert auf Basis des vorgegebenen virtuellen Soll-Prozesses, die entsprechenden Interpolationsachswerte zur Ausführung durch den Roboter. Gleichfalls generiert die Steuerung, die zur Ausführung des Prozesses notwendigen Überwachungen. In diesem Fall generiert die Steuerung eine Überwachung der durch den Greifer maximal aufbringbaren Kräfte, welche standardgemäß auf maximal 10N beschränkt werden. Zusätzlich generiert die Steuerung eine Kollisionsdetektion. Sie nutzt dazu sichere Momentensensorik und sichere Positionssensorik. Zur Kollisionsdetektion wird ein Kollisionsbeobachter genutzt, der Modelle des Roboters und insbesondere der Umgebung beinhaltet. Nach Beendigung der Vorgabe und Generierung der Interpolationsachswerte sowie der Überwachungen wird der Prozess durch den Roboter ausgeführt und der dadurch realisierte Ist-Prozess durch die automatisch generierten Überwachungen beobachtet. Während der Ausführung wird der Prozess durch einen anderen Benutzer modifiziert. Dieser weist sich, ebenfalls an der Benutzerschnittstelle, als Sicherheitsadministrator aus. Er modifiziert die maximal aufbringbare Kraft auf 20N und aktiviert zusätzlich eine Geschwindigkeitsüberwachung, wobei er die maximale Geschwindigkeit auf 20 cm/s definiert. Die betroffenen Sicherheitsfunktionen werden durch die Steuerung automatisch aktualisiert und angewendet.

## Patentansprüche

1. Verfahren zum Steuern einer Manipulatoranordnung mit wenigstens einem Manipulator (4), insbesondere einem Roboter, welcher eine Steuerung aufweist, mit:
einem Schritt A (S10) eines Vorgebens eines virtuellen Soll-Prozesses (P_v);
einem Schritt B (S30) eines Ausführens eines realen Ist-Prozesses (P) durch die Manipulatoranordnung auf Basis des virtuellen Sollprozesses (P_v);
einem Schritt C (S40) eines Überwachens des realen Ist-Prozesses (P); und
einem Schritt D (S20) eines Vorgebens wenigstens einer Überwachung (S; 5, 6, 11, 12) des realen Ist-Prozesses (P) durch die Steuerung auf Basis des virtuellen Soll-Prozesses (P_v),
wobei die wenigstens eine Überwachung (S; 5, 6, 11, 12) auf Basis eines Modells vorgegeben wird;
wobei die Manipulatoranordnung in einen sicheren Zustand überführt wird, wenn die wenigstens eine Überwachung ein Fehlverhalten registriert;
wobei das Modell eine sicher erfasste Größe in eine Größe, die nicht-sicher erfasst wird, transformiert;
wobei die wenigstens eine Überwachung auf ein oder mehrere Ergebnisse des Modells gerichtet ist;
wobei die wenigstens eine Überwachung auf Basis einer Erfassung eines Zustandes der Manipulatoranordnung vorgegeben wird;
wobei dieser Zustand ein Vorhandensein von sicherer Sensorik und/oder sicherer Aktuatorik angibt.

2. Verfahren nach Anspruch 1, **dadurch gekennzeichnet, dass** eine Überwachung (S; 5, 6, 11, 12) auf Basis eines Zustandes
- der Steuerung,
- eines Werkzeugs eines Manipulators der Manipulatoranordnung,
- eines zu manipulierenden Werkstücks und/oder
- einer Vorrichtung, die mit der Manipulatoranordnung zusammenwirkt,
vorgegeben wird.

3. Verfahren nach einem der vorhergehenden Ansprüche, **dadurch gekennzeichnet, dass** ein Prozess (P_v, P) und/oder eine Überwachung (S; 5, 6, 11, 12) mehrere hierarchisierte Teilprozesse umfasst, insbesondere eine Bahnplanung und/oder eine kinematische Transformation.

4. Verfahren nach einem der vorhergehenden Ansprüche, **dadurch gekennzeichnet, dass** ein Prozess (P_v, P) sequentielle und/oder parallele Teilprozesse umfasst, insbesondere eine ungebundene Bewegung oder einen Umgebungskontakt.

5. Verfahren nach Anspruch 3 oder 4, **dadurch gekennzeichnet, dass** durch die Steuerung wenigstens eine Überwachung (S; 5, 6, 11, 12) eines Teilprozesses des realen Ist-Prozesses (P) auf Basis eines Teilprozesses des virtuellen Soll-Prozesses (P_v) vorgegeben wird.

6. Verfahren nach einem der vorhergehenden Ansprüche, **dadurch gekennzeichnet, dass** eine Überwachung (S; 5, 6, 11, 12) durch
- einen Benutzer,
- einen Zustand der Manipulatoranordnung,
- einen Zustand der Steuerung und/oder
- einen Zustand einer Vorrichtung aus der Umgebung der Manipulatoranordnung, die mit der Manipulatoranordnung zusammenwirkt, vorgegeben wird.

7. Verfahren nach einem der vorhergehenden Ansprüche, **dadurch gekennzeichnet, dass** der Schritt A (S10) und/oder der Schritt D (S20) off-line, insbesondere vorab, und/oder on-line, insbesondere während des Schrittes B (S30), ausgeführt wird.

8. Verfahren nach einem der vorhergehenden Ansprüche, **dadurch gekennzeichnet, dass** die Vorgabe der Überwachung (S; 5, 6, 11, 12) autorisiert veränderbar ist.

9. Verfahren nach einem der vorhergehenden Ansprüche, **dadurch gekennzeichnet, dass** wenigstens eine Überwachung (S; 5, 6, 11, 12) sicher vorgegeben wird.

10. Verfahren nach einem der vorhergehenden Ansprüche, **dadurch gekennzeichnet, dass** der Schritt B (S30) erst durchgeführt wird, wenn der Schritt D (S20) beendet ist.

11. Verfahren nach einem der vorhergehenden Ansprüche, **dadurch gekennzeichnet, dass** die wenigstens eine Überwachung (S; 5, 6, 11, 12) des realen Ist-Prozesses (P) durch die Steuerung auf Basis des virtuellen Soll-Prozesses (P_v) automatisch generiert wird.

12. Steuerung für einen Manipulator, insbesondere einen Roboter, die zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Steuerung nach Anspruch 12 abläuft.

14. Computerprogrammprodukt mit Programmcode, der auf einem maschinenlesbaren Träger gespeichert ist und ein Computerprogramm nach Anspruch 13 umfasst.

## Claims

1. A method for controlling a manipulator system comprising at least one manipulator (4), in particular a robot, which includes a controller, comprising:
a step A (S10) of specifying a virtual target process (P_v);
a step B (S30) of executing an actual real-time process (P) by the manipulator assembly based on the virtual target process (P_v);
a step C (S40) of monitoring the actual real-time process (P); and
a step D (S20) of specifying at least one monitoring function (S; 5, 6, 11, 12) of the actual real-time process (P) by the controller based on the virtual target process (P_v),
wherein the at least one monitoring function (S; 5, 6, 11, 12) is specified based on a model;
wherein the manipulator assembly is transitioned to a safe state if the at least one monitoring detects a malfunction;
wherein the model transforms a safely detected variable into a variable that is not safely detected;
wherein the at least one monitoring is directed at one or more results of the model;
wherein the at least one monitoring is defined based on a detection of a state of the manipulator assembly;
wherein this state indicates the presence of safe sensor technology and/or safe actuator technology.

2. The method according to claim 1, **characterized in that** monitoring (S; 5, 6, 11, 12) is performed based on a state
- of the controller,
- of a tool of a manipulator of the manipulator assembly,
- of a workpiece to be manipulated, and/or
- a device that interacts with the manipulator assembly,
is specified.

3. Method according to one of the preceding claims, **characterized in that** a process (P_v, P) and/or a monitoring (S; 5, 6, 11, 12) comprises several hierarchical subprocesses, in particular a path planning and/or a kinematic transformation.

4. A method according to any of the preceding claims, **characterized in that** a process (P_v, P) comprises sequential and/or parallel subprocesses, in particular an unconstrained movement or an environmental contact.

5. A method according to claim 3 or 4, **characterized in that** the control system specifies at least one monitoring (S; 5, 6, 11, 12) of a subprocess of the actual real-time process (P) based on a subprocess of the virtual target process (P_v).

6. A method according to one of the preceding claims, **characterized in that** monitoring (S; 5, 6, 11, 12) is specified by
- a user,
- a state of the manipulator assembly,
- a state of the controller, and/or
- a state of a device from the environment of the manipulator assembly that interacts with the manipulator assembly.

7. A method according to any of the preceding claims, **characterized in that** step A (S10) and/or step D (S20) is performed offline, in particular in advance, and/or online, in particular during step B (S30).

8. A method according to any of the preceding claims, **characterized in that** the specification of the monitoring (S; 5, 6, 11, 12) can be modified with authorization.

9. A method according to any of the preceding claims, **characterized in that** at least one monitoring function (S; 5, 6, 11, 12) is securely specified.

10. A method according to any of the preceding claims, **characterized in that** step B (S30) is performed only after step D (S20) has been completed.

11. A method according to any of the preceding claims, **characterized in that** the at least one monitoring (S; 5, 6, 11, 12) of the actual real-time process (P) is automatically generated by the controller based on the virtual target process (P_v).

12. A controller for a manipulator, in particular a robot, configured to perform a method according to any of the preceding claims.

13. A computer program that executes a method according to any of claims 1 through 11 when running in a controller according to claim 12.

14. A computer program product comprising program code stored on a machine-readable medium and comprising a computer program according to claim 13.

## Revendications

1. Procédé de commande d'un ensemble manipulateur avec au moins un manipulateur (4), en particulier un robot qui présente une commande, avec : une étape A (S10) de spécification d'un processus théorique virtuel (P_v) ; une étape B (S30) d'exécution d'un processus effectif réel (P) par l'ensemble manipulateur sur la base du processus théorique virtuel (P_v) ;
une étape C (S40) de surveillance du processus effectif réel (P) ; et
une étape D (S20) de prescription d'au moins une surveillance (S ; 5, 6, 11, 12) du processus effectif réel (P) par la commande sur la base du processus théorique virtuel (P_v),
dans lequel l'au moins une surveillance (S ; 5, 6, 11, 12) est prescrite sur la base d'un modèle ;
dans lequel l'ensemble manipulateur est amené dans un état sûr si l'au moins une surveillance détecte un mauvais comportement ;
dans lequel le modèle transforme une grandeur détectée de manière sûre en une grandeur qui est détectée de manière non sûre ;
dans lequel l'au moins une surveillance est axée sur un ou plusieurs résultats du modèle ;
dans lequel l'au moins une surveillance est prescrite sur la base d'une détection d'un état de l'ensemble manipulateur ;
dans lequel cet état indique une présence de capteurs sûrs et/ou d'actionneurs sûrs.

2. Procédé selon la revendication 1, **caractérisé en ce qu'**une surveillance (S ; 5, 6, 11, 12) est prescrite sur la base d'un état
- de la commande,
- d'un outil d'un manipulateur de l'ensemble manipulateur,
- d'une pièce à manipuler et/ou
- d'un dispositif qui coopère avec l'ensemble manipulateur.

3. Procédé selon l'une quelconque des revendications précédentes, **caractérisé en ce qu'**un processus (P_v, P) et/ou une surveillance (S ; 5, 6, 11, 12) comprend plusieurs sous-processus hiérarchisés, notamment une planification de trajectoire et/ou une transformation cinématique.

4. Procédé selon l'une quelconque des revendications précédentes, **caractérisé en ce qu'**un processus (P_v, P) comprend des sous-processus séquentiels et/ou parallèles, notamment un mouvement libre ou un contact d'environnement.

5. Procédé selon la revendication 3 ou 4, **caractérisé en ce qu'**au moins une surveillance (S ; 5, 6, 11, 12) d'un sous-processus du processus réel effectif (P) est prescrite par la commande sur la base d'un sous-processus du processus théorique virtuel (P_v).

6. Procédé selon l'une quelconque des revendications précédentes, **caractérisé en ce qu'**une surveillance (S ; 5, 6, 11, 12) est prescrite par
- un utilisateur,
- un état de l'ensemble manipulateur,
- un état de la commande et/ou
- un état d'un dispositif provenant de l'environnement de l'ensemble manipulateur qui coopère avec l'ensemble manipulateur.

7. Procédé selon l'une quelconque des revendications précédentes, **caractérisé en ce que** l'étape A (S10) et/ou l'étape D (S20) est exécutée hors ligne, notamment préalablement, et/ou en ligne, notamment pendant l'étape B (S30).

8. Procédé selon l'une quelconque des revendications précédentes, **caractérisé en ce que** la prescription de la surveillance (S ; 5, 6, 11, 12) est modifiable de manière autorisée.

9. Procédé selon l'une quelconque des revendications précédentes, **caractérisé en ce qu'**au moins une surveillance (S ; 5, 6, 11, 12) est prescrite de manière sûre.

10. Procédé selon l'une quelconque des revendications précédentes, **caractérisé en ce que** l'étape B (S30) n'est réalisée que lorsque l'étape D (S20) est terminée.

11. Procédé selon l'une quelconque des revendications précédentes, **caractérisé en ce que** l'au moins une surveillance (S ; 5, 6, 11, 12) du processus réel effectif (P) est générée automatiquement par la commande sur la base du processus théorique virtuel (P_v).

12. Commande pour un manipulateur, en particulier un robot, qui est configurée pour mettre en œuvre un procédé selon l'une quelconque des revendications précédentes.

13. Programme informatique qui exécute un procédé selon l'une quelconque des revendications 1 à 11 lorsqu'il se déroule dans une commande selon la revendication 12.

14. Produit programme d'ordinateur avec code de programme qui est stocké sur un support lisible par machine et comprend un programme d'ordinateur selon la revendication 13.
